# EUROPEAN PATENT SPECIFICATION

(11) **EP 1 681 600 B1**
(45) Date of publication and mention of the grant of the patent: **30.07.2008**
(21) Application number: 06100183.0
(22) Date of filing: 09.01.2006
(51) Int. Cl.: G03G 15/00

(54) **Image forming apparatus and method with means for rearranging image data of documents to be printed**
Vorrichtung und Verfahren zur Bilderzeugung mit Mitteln zur Umordnung von Bilddaten von auszudruckenden Dokumenten
Appareil et procédé de formation d'images avec des moyens pour réarranger des données d'image de documents à imprimer

(30) Priority: 14.01.2005 KR 2005003567
(43) Date of publication of application: 19.07.2006
(73) Proprietor: Samsung Electronics Co., Ltd., Yeongtong-gu Suwon-city, Gyeonggi-do 442-742 (KR)
(72) Inventor: Lee, Seung-soo, Yeontong-gu Suwon-si Gyeonggi-do (KR)
(74) Representative: Walaski, Jan Filip

(56) References cited:
- WO-A-02/23884
- US-A- 5 301 262

## Description

The present invention relates to an image forming apparatus and a controlling method thereof. More particularly, the present invention relates to an image forming apparatus to copy a document in which irregular pages are randomly included, and a method thereof.

General image forming apparatuses, such as a photocopier and a multi-function office machine, are equipped with a 'collation copy' function in which image data of all pages of a document stacked on an automatic document feeder (ADF) are read as a set by scanning, and the set of read image data is printed a number of times corresponding to the required number of copies. For example, when a user stacks a document comprising 5 pages on the ADF and selects the collation copy function with the number of copies set to 2, pages 1 to 5 of the document are printed twice.

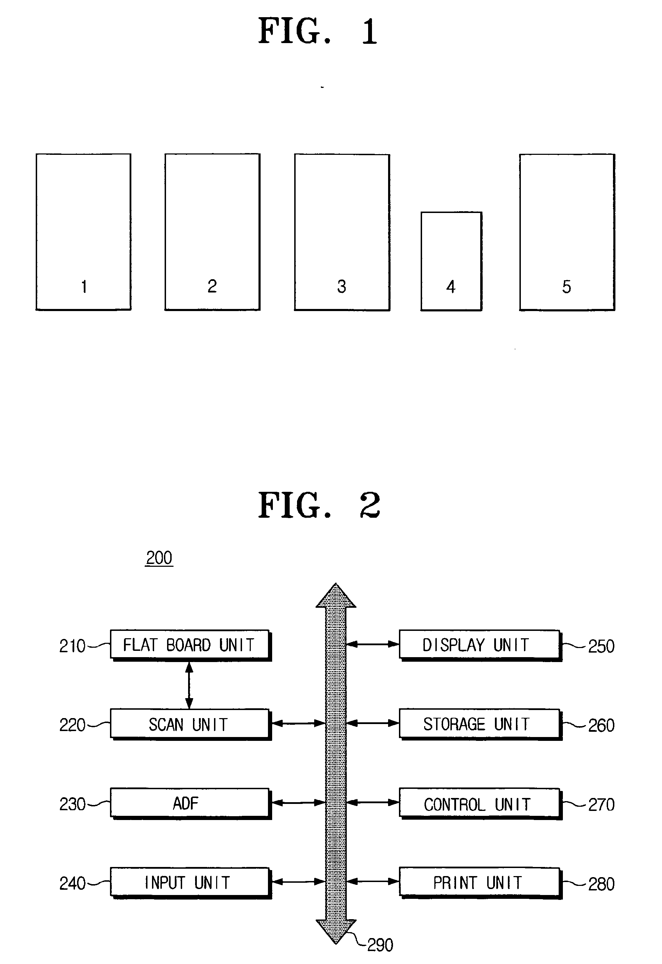

Conventionally, however, when the document comprises an irregular page, such as a photo or a card, which cannot be fed through a general ADF, as illustrated in Figure 1, a copy of the document cannot be made by simply stacking the whole document on the ADF. In Figure 1, pages 1, 2, 3 and 5 have a regular size and may be fed through the general ADF for scanning and printing afterwards. However, page 4 has an irregular size and cannot be fed through the ADF. Page 4 may be a photo, a business card, a plastic card or embossed materials. In order to solve this problem, the following two methods have been used traditionally.

In the first method, the regular pages 1, 2, 3 and 5 are copied through the ADF a number of times corresponding to the number of copies set for the collation copy function. The irregular page 4 is placed on a platen glass and copied separately to yield the same number of copies. Then, a user manually inserts the copies of irregular page 4 one by one between the regular pages in the right order, for example, between the page 3 and the page 5 of each set.

In the second method, the irregular page 4 is copied while placed on the platen glass, to generate a copy of page 4 having the regular size. The copy of page 4 now having the regular size is inserted in the original document according to the page order, between the page 3 and the page 5. The ordered pages are stacked on the ADF and copied together according to the collation copy function.

However, according to the first method, especially when the number of copies is large, it is very cumbersome for the user to manually insert the irregular pages which are separately copied between the regular pages in the right order.

Also, according to the second method, by re-copying a once-copied document the image quality deteriorates. Further, when the document includes one or more irregular pages, the user has to put the irregular pages on the platen glass and copy the irregular pages one by one. Then, the user has to insert the separately copied pages between the regular pages in the right order and then stack the whole document on the ADF. This is very inefficient.

US 5,301,262 describes an image processor in which image data is read from a hard disk and reproduced by an image output unit according to an order set in a page number list.

WO 02/23884 describes a method and system for scanning documents in a network environment and merging the resulting scan files with other documents into a printing workflow.

The present invention provides an image forming apparatus and method for copying a document including irregular pages without having to separately copy and insert, or re-copy the irregular pages. Additional aspects and advantages of the present invention will be set forth in part in the description which follows and, in part, will be obvious from the description, or may be learned by practice of the invention.

According to the invention, there is provided a method of controlling an image forming apparatus according to claim 1 of the appended claims and an image forming apparatus having an automatic document feeder and a document tray according to claim 9 of the appended claims.

The method may further comprise displaying the image data according to the predetermined order, and changing the predetermined order to generate a new order so that pages of the image data can be arranged according to the new order.

The method may further comprise inputting the number of copies, and printing of the image data according to the predetermined order and the input number of copies.

The at least one first document may comprise at least one irregular document, the second document may comprise a regular document, and the reading of the at least one irregular document on the flat board unit, may comprise inputting a page number of the at least one irregular document, and reading the image data by scanning the at least one irregular document input with the page number on the flat board unit.

The method may further comprise checking whether there is additional irregular document to be scanned, and inputting another page number for the additional irregular document and reading the image data of the additional irregular document.

The method further comprises inputting the number of times corresponding to the at least one irregular document; and repeating the inputting of the page numbers of the irregular document and the reading of the image data of the irregular document according to the input number of times.

The reading the second document supplied from the ADF may comprise reading the image data by scanning the regular document supplied by the ADF, and allocating second page numbers to the read image data of the regular document, without allocating the input second page number to the at least one irregular document.

The predetermined order may be an order in which the respective image data of the regular and irregular documents are received.

The storing of the image data of the at least one irregular document and the regular document may comprise storing the image data of the read regular document and the at least one irregular document with the corresponding page numbers.

The foregoing and/or other aspects of the present invention may also be achieved by providing an image forming apparatus having an automatic document feeder (ADF) and a flat board unit for collation copy, the image forming apparatus comprising a scan unit to read image data from a first document placed on the flat board unit and a second document supplied by the ADF, a storage unit to store the image data read from the first and second documents, a control unit to arrange the stored image data in a predetermined order, and a print unit to print the arranged image data according to the predetermined order.

The image forming apparatus may further comprise a display unit to display the stored image data arranged in the predetermined order, and an input unit to input a new order so that the displayed image data is rearranged according to the new order.

The scan unit may scan the document placed on the flat board unit by moving in a conveyance direction and scans the document supplied from the ADF in a fixed position.

The second document may comprise a regular document supplied by the ADF and the first document may comprise at least one irregular document placed on the flat board unit.

The image forming apparatus may further comprise an input unit to input a first page number of the at least one irregular document and one or more second page numbers of one or more pages of the regular document. The control unit may allocate the second page numbers to the one or more regular document in an order in which the one or more pages are scanned by the scan unit, while allocating the first page number to the at least one irregular document.

The storage unit may store the image data read by the scan unit with the corresponding first and second page numbers.

The input unit may further input the number of copies, and the control unit may control the print unit to print the image data in the predetermined order a number of times corresponding to the input number of copies.

The foregoing and/or other aspects of the present invention may also be achieved by providing a method of controlling an image forming apparatus, the method including inputting a second page number, reading a second document to generate second data, storing the second data of the read second document with the second page number, inputting a first page number and a third page number, reading a first document and a third document to generate first and third data, storing the read first and third documents with the first and third page numbers, respectively, and arranging the first data, the second data, and the third data according to the first, second, and third page numbers.

The foregoing and/or other aspects of the present invention may also be achieved by providing an image forming apparatus including an input unit to input a first, a second, and a third page number, a first reading unit to read a first and a third document to generate corresponding first and third data, a second reading unit to read a second document to generate corresponding second data, a storage unit to store the first, second and third data with the first, second and third page numbers, and a control unit to arrange the first, the second and the third data according to the first the second and the third page numbers.

The foregoing and/or other aspects of the present invention may also be achieved by providing a computer readable storage medium to store computer readable codes to perform a method of controlling an image forming apparatus, the method including inputting a second page number, reading a second document to generate second data, storing the second data of the read second document with the second page number, inputting a first page number and a third page number, reading a first document and a third document to generate first and third data, storing the read first and third documents with the first and third page numbers, respectively, and arranging the first data, the second data, and the third data according to the first, second, and third page numbers.

These and/or other aspects and advantages of the present invention will become apparent and more readily appreciated from the following description of the embodiments, taken in conjunction with the accompanying drawings, in which:
Figure 1 illustrates a document which includes irregular pages that cannot be fed through an automatic document feeder (ADF) in a conventional image forming apparatus;
Figure 2 is a block diagram illustrating an image forming apparatus according to an embodiment of the present invention;
Figure 3 is a flowchart illustrating a method of controlling the image forming apparatus according to an embodiment of the present invention; and
Figure 4 is a flowchart illustrating operations S320 and S330 of the method of Figure 3.

Figure 2 is a block diagram of an image forming apparatus according to an embodiment of the present invention.

Referring to Figure 2, an image forming apparatus 200 comprises a flat board unit 210, a scan unit 220, an automatic document feeder (ADF) 230, an input unit 240, a display unit 250, a storage unit 260, a control unit 270 and a print unit 280. The scan unit 220, the ADF 230, the input unit 240, the display unit 250, the storage unit 260, the control unit 270 and the print unit 280 communicate with one another through a data bus 290.

The ADF 230 supplies regular documents having a predetermined size, as stacked thereon, to the scan unit 220 sheet by sheet so that image data corresponding to pages of the regular document are successively read. The term "regular document" herein refers to a document having a page size suitable for the ADF 230, which stacks and feeds the document to read the image data. A regular document may be A4-size paper or B5-size paper.

The flat board unit 210 is a document support or tray on which an irregular document can be placed. The flat board unit 210 may be formed of transparent platen glass or transparent plastic. Irregular documents, such as a photo, a business card, a plastic card, embossed material, etc., have sizes not suitable to be processed through the ADF 230 to the scan unit 220. Therefore, the irregular documents are placed on the flat board unit 210 so that the image data corresponding to the irregular documents are read one by one. The regular documents can be placed on the flat board unit 210 to be scanned, and the irregular documents may be scanned using the ADF 230.

The scan unit 220 scans the regular document to read the image data in the order in which the pages are supplied from the ADF 230. The scan unit 220 also scans the irregular document placed on the flat board unit 210 to thereby read the corresponding image data. The scan unit 220 comprises a scanning module (not shown) which scans the irregular document placed on the flat board unit 210 by moving in a conveyance direction of the document and scans the regular document being supplied by the ADF 230 in a fixed position.

The user may select a copy mode, such as a duplicate copy mode, a collation copy mode, a magnification copy mode and a reduction copy mode, to be performed in the image forming apparatus 200 and may set the number of copies, using the input unit 240. The input unit 240 sends the user-selected mode, the number of copies, and other user input data to the control unit 270. The input unit 240 comprises character keys, numeric keys and shortcut keys to enable the user to select functions. If the collation copy mode is selected, the user inputs through the input unit 240 information on whether the document includes any irregular document and a page number of the irregular document. When any error occurs in the order of the image data displayed through the display unit 250, the user inputs a new order using the keys of the input unit 240. The new order is transmitted to the control unit 270 to correct the error.

Under the control of the control unit 270, the display unit 250 displays menu screens to select various operations of the image forming apparatus 200 and to display operation states of the image forming apparatus 200. The display unit 250 may be a liquid crystal display (LCD) panel. The display unit 250 displays the image data arranged by the control unit 270 so that the user is able to verify whether the order is right, that is, whether the regular documents and the irregular document are arranged according to the set order.

The storage unit 260 stores controlling programs for operating the image forming apparatus 200 and various data generated during the operation of the image forming apparatus 200. More specifically, the storage unit 260 stores the image data read by the scan unit 220. In addition, the storage unit 260 stores the page number of the irregular document input through the input unit 240, and page numbers allocated to the image data read from the regular documents.

The print unit 280 prints the image data read by the scan unit 220 according to a predetermined printing condition, under the control of the control unit 270. The print unit 280 prints the image data stored in the storage unit 260 in the set order. The printing order is described in greater detail hereinafter.

The control unit 270 controls the overall operations of the image forming apparatus 200. More specifically, when the collation copy mode is selected, the control unit 270 displays a message through the display unit 250 to check whether one or more documents to be copied include any irregular document. When the documents to be copied include an irregular document, the control unit 270 displays a message requesting the page number of the irregular document. The page number is input by the user through the input unit 240, and stored in the storage unit 260 together with the image data of the irregular document read by the scan unit 220.

The control unit 270 allocates (assigns) the page numbers to the image data of the regular documents supplied from the ADF 230 and read by the scan unit 220 while not assigning the page numbers to the irregular document, and also assigns the page number to the irregular document. Then, the control unit 270 arranges the read image data of the irregular document and the regular document according to the page numbers. The page numbers of the regular documents do not include the page number of the irregular document.

The control unit 270 transmits the image data from the storage unit 260 to the print unit 280 in the order of the page numbers and controls printing of the image data a number of times according to the number of copies. Through the above processes, the collation copy mode is performed for the documents comprising the regular documents and the irregular document in the order of the page numbers.

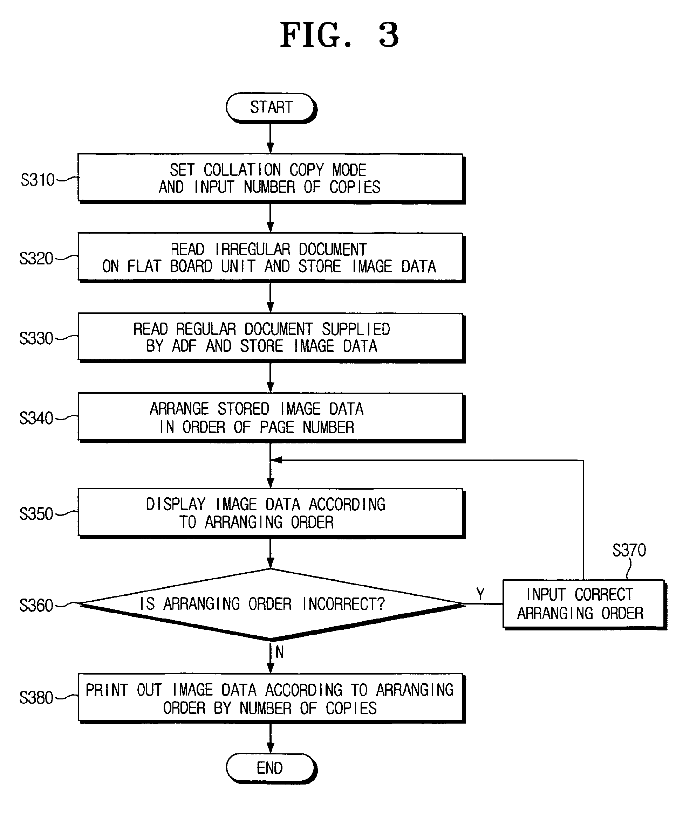

Figure 3 is a flowchart illustrating a method of controlling an image forming apparatus according to an embodiment of the present invention.

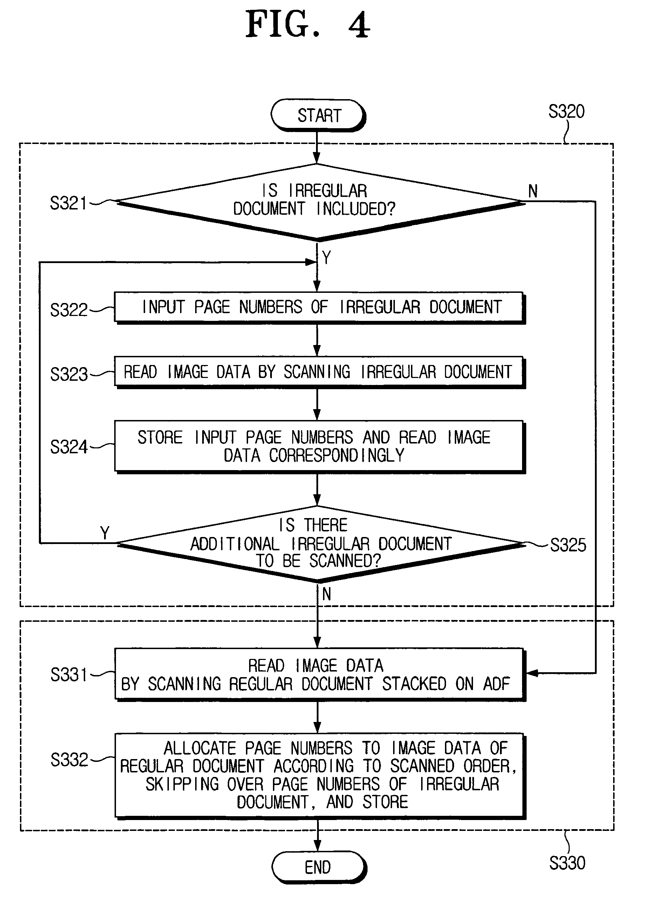

Referring to Figures 2 and 3, when the collation copy mode is selected through the input unit 240 (operation S310), the control unit 270 stores the image data of the irregular document, that is placed on the flat board unit 210 and read by the scan unit 220, in the storage unit 260 (operation S320). The image data obtained by scanning the regular document supplied by the ADF 230 is stored in the storage unit 260 (operation S330). The operations S320 to S330 are described in greater detail with reference to Figure 4. A message inquiring whether the document to be copied includes at least one irregular document is displayed on the display unit 250 to be confirmed by the user (operation S321).

When it is confirmed that the document to be copied includes the irregular document, the control unit 270 displays on the display 250 a message prompting the user to input the page number of the irregular document (operation S322). When the document to be copied does not include the irregular document, the image data of the regular document stacked on the ADF 230 is read by the scan unit 220 (operation S331) and the collation copy mode is performed with the read image data.

When the user inputs the page number of the irregular document, the control unit 270 reads the image data of the irregular document placed on the flat board unit 210 with the scan unit 220 (operation S323), and stores in the storage unit 260 the input page number and the corresponding image data of the irregular document (operation S324).

The control unit 270 displays through the display unit 250 a message to check whether there is an additional irregular document to be scanned (operation S325). When there is an additional irregular document to be scanned, operations S322 to S324 are repeated until there is no additional irregular document to be scanned.

According to the present embodiment, it can be checked every time when the scanned irregular document is stored, whether there is the additional irregular document to be scanned. However, when one or more page numbers of the irregular documents are input in the operation S321, the operations S322 to S324 may be repeated the input number of times corresponding to the one or more page numbers, and the operation S325 can be omitted.

After the image data of all irregular documents is read, the control unit 270 controls the ADF 230 to consecutively supply the stacked regular document to the scan unit 220, to thereby read the image data of the regular document (operation S331).

Then, the control unit 270 allocates (assigns) page numbers, to the read image data of the regular documents in an order of scanning the image data, skipping over page numbers input by the user for the irregular documents. The image data of the regular document and the corresponding allocated page numbers are stored together in the storage unit 260 (operation S332).

Then, the control unit 270 arranges the stored image data of the irregular documents and the regular document, according to the order of the page numbers (operation S340).

The control unit 270 displays on the display unit 250 the image data according to the arranging order so that the user can check whether the arranging order of the image data is correct (operation S360). When there is an error in the order of the image data, the control unit 270 receives a new arranging order input by the user using the input unit 240 and corrects the order with a new arranging order so that pages of the image data can be renumbered or rearranged according to the new arranging order (operation S370).

Then, the control unit 270 transmits the image data stored in the storage unit 260 to the print unit 280 to print the image data in the arranging order a number of times corresponding to the set number of copies (operation S380).

According to an embodiment of the present invention, when copying a document comprising both pages of a regular size and pages of an irregular size, a collation copy can be made without having to separately copy the irregular document which cannot be supplied to a scanner through an ADF, and insert the separately copied document one by one into the regular document.

In addition, according to an embodiment of the present invention, since the irregular document is not copied to be in the regular size and then recopied together with the rest regular document, deterioration of the image quality, caused by the recopying, can be prevented.

The invention can also be embodied as computer readable codes on a computer readable recording medium. The computer readable recording medium is any data storage device that can store data which can thereafter be read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over a network coupled to the computer systems so that the computer readable code is stored and executed in a distributed fashion.

Although a few embodiments of the present invention have been shown and described, it will be appreciated by those skilled in the art that changes may be made in these embodiments without departing from the principles of the invention, the scope of which is defined in the appended claims.

## Claims

1. A method of controlling an image forming apparatus having an automatic document feeder (230) and a document tray (210), the method comprising:
scanning a first document placed on the document tray (210);
scanning a plurality of pages of a second document supplied by the automatic document feeder (230); and
storing first document image data and second document image data resulting from scanning the first document and second document pages, **characterised by**,
receiving a first document page number input by a user and assigning the page number to the first document image data, before scanning the second document pages;
assigning page numbers to the second document image data in the order in which the pages of the second document are scanned, omitting the first document page number input by the user; and
printing the stored image data in an order determined by the assigned page numbers.

2. The method of claim 1, further comprising:
displaying the stored image data according to the determined order; and
changing the determined order to generate a new order so that pages of the image data can be arranged according to the new order.

3. The method of claim 1 or 2, further comprising:
receiving a user indication of a number of copies to print; and
printing the stored image data according to the determined order and the received indication.

4. The method of claim 1, 2 or 3, wherein the first document is of a size that cannot be supplied by the automatic document feeder and the second document pages are of a size that can be supplied by the automatic document feeder.

5. The method of claim 4, further comprising:
checking whether there is an additional first document to be scanned,
if there is an additional first document to be scanned, receiving another page number entered by the user for the additional first document; and
scanning the image data of the additional first document.

6. The method of claim 4, further comprising:
receiving an indication of the number of first documents to be scanned; and
repeating the steps of receiving a first document page number and scanning the first document according to the received indication.

7. The method of any preceding claim, wherein the storing of the image data of the at least one first document and the second document pages comprises storing the image data of the scanned second document pages and the at least one first document with the corresponding page numbers.

8. The method of any preceding claim, further comprising receiving second document page numbers entered by a user and assigning the second document page numbers to respective second document page image data resulting from scanning pages of the second document, in an order in which the second document pages are scanned, wherein the step of printing comprises printing the stored image data in an order determined by the assigned further page numbers.

9. An image forming apparatus having an automatic document feeder (230) and a document tray (210), the image forming apparatus comprising:
a scan unit (220) for scanning a first document placed on the document tray (210) and a plurality of pages of a second document supplied by the automatic document feeder (230); and
a storage unit (260) for storing first document image data and second document image data resulting from scanning the first and second documents, **characterised by**,
a control unit (270) arranged to receive a first document page number input by a user and to assign the page number to the first document image data, before the scan unit (220) scans the second document pages, and to assign page numbers to the second document image data in the order in which the pages of the second document are scanned, omitting the first document page number input by the user; and
a print unit (280) for printing the stored image data in an order determined by the assigned page number.

10. The image forming apparatus of claim 9, further comprising:
a display unit (250) arranged to display the stored image data arranged in the determined order; and
an input unit (240) arranged to receive a new order so that the displayed image data can be rearranged according to the new order.

11. The image forming apparatus of claim 9 or 10, wherein the scan unit (220) moves in a conveyance direction to scan the first document placed on the document tray (210) and is in a fixed state while scanning the second documents supplied from the automatic document feeder (230).

12. The image forming apparatus of claim 9, 10 or 11, wherein the second document pages are of a size that can be supplied by the automatic document feeder (230), and the first document comprises at least one document placed on the document tray (210) of a size that cannot be supplied by the automatic document feeder (230).

13. The image forming apparatus of claim 12, wherein the control unit (270) is further arranged to receive one or more second document page numbers of the second document pages and to allocate the second page numbers to the second document pages in an order in which the one or more second document pages are scanned by the scan unit (220) while allocating the first page number to the first document image data.

14. The image forming apparatus of claim 12, wherein the storage unit (260) stores the image data read by the scan unit (220) with the corresponding first and second page numbers.

15. The image forming apparatus of claim 12, further comprising:
an input unit (240) arranged to receive a user indication of a number of copies to be printed, wherein,
the control unit (270) controls the print unit (280) to print the stored image data in the determined order a number of times corresponding to the received indication.

16. A computer program comprising software code adapted to perform the method of any one of claims 1 to 8 when executed by a data processing apparatus.

## Patentansprüche

1. Verfahren zum Steuern einer Bilderzeugungsvorrichtung, die eine automatische Dokumenteinzugeinrichtung (230) und eine Dokumentenablage (210) besitzt, wobei das Verfahren umfasst:
Abtasten eines ersten Dokuments, das auf der Dokumentenablage (210) angeordnet ist;
Abtasten mehrerer Seiten eines zweiten Dokuments, das durch die automatische Dokumenteinzugeinrichtung (230) zugeführt wird; und
Speichern von Bilddaten des ersten Dokuments und von Bilddaten des zweiten Dokuments, die sich aus der Abtastung des ersten Dokuments und von Seiten des zweiten Dokuments ergeben, **gekennzeichnet durch**
Empfangen der Seitenzahl des ersten Dokuments, die **durch** einen Anwender eingegeben wird, und Zuweisen der Seitenzahl zu den Bilddaten des ersten Dokuments, bevor die Seiten des zweiten Dokuments abgetastet werden;
Zuweisen von Seitenzahlen zu den Bilddaten des zweiten Dokuments in der Reihenfolge, in der die Seiten des zweiten Dokuments abgetastet werden, wobei die Seitenzahl des ersten Dokuments, die **durch** den Anwender angegeben wird, weggelassen wird; und
Drucken der gespeicherten Bilddaten in einer Reihenfolge, die **durch** die zugewiesenen Seitenzahlen bestimmt ist.

2. Verfahren nach Anspruch 1, das ferner umfasst:
Anzeigen der gespeicherten Bilddaten gemäß der bestimmten Reihenfolge; und
Ändern der bestimmten Reihenfolge, um eine neue Reihenfolge zu erzeugen, so dass die Seiten der Bilddaten in der neuen Reihenfolge angeordnet werden können.

3. Verfahren nach Anspruch 1 oder 2, das ferner umfasst:
Empfangen einer Anzahl von zu druckenden Kopien; und
Drucken der gespeicherten Bilddaten in der bestimmten Reihenfolge und der empfangenen Angabe.

4. Verfahren nach Anspruch 1, 2 oder 3, wobei das erste Dokument eine Größe hat, die nicht durch die automatische Dokumentzufuhreinrichtung zugeführt werden kann, und die Seiten des zweiten Dokuments eine Größe haben, die durch die automatische Dokumentzufuhreinrichtung zugeführt werden kann.

5. Verfahren nach Anspruch 4, das ferner umfasst:
Prüfen, ob ein weiteres erstes Dokument vorhanden ist, das abgetastet werden soll;
falls ein weiteres erstes abzutastendes Dokument vorhanden ist, Empfangen einer weiteren Seitenzahl, die durch den Anwender eingegeben wird, für das weitere erste Dokument; und
Abtasten der Bilddaten des weiteren ersten Dokuments.

6. Verfahren nach Anspruch 4, das ferner umfasst:
Empfangen einer Angabe der Anzahl erster Dokumente, die abgetastet werden sollen; und
Wiederholen der Schritte des Empfangens der Seitenzahl des ersten Dokuments und des Abtastens des ersten Dokuments gemäß der empfangenen Angabe.

7. Verfahren nach einem vorhergehenden Anspruch, wobei das Speichern der Bilddaten des wenigstens einen ersten Dokuments und der Seiten des zweiten Dokuments das Speichern der Bilddaten der abgetasteten Seiten des zweiten Dokuments und des wenigstens einen ersten Dokuments mit den entsprechenden Seitenzahlen umfasst.

8. Verfahren nach einem vorhergehenden Anspruch, das ferner das Empfangen von Seitenzahlen des zweiten Dokuments, die durch einen Anwender eingegeben werden, und das Zuweisen der Seitenzahlen des zweiten Dokuments zu entsprechenden Bilddaten des zweiten Dokuments, die sich aus dem Abtasten von Seiten des zweiten Dokuments ergeben, in einer Reihenfolge, in der die Seiten des zweiten Dokuments abgetastet werden, umfasst, wobei der Schritt des Druckens das Drucken der gespeicherten Bilddaten in einer Reihenfolge, die durch die zugewiesenen weiteren Seitenzahlen bestimmt ist, umfasst.

9. Bilderzeugungsvorrichtung, die eine automatische Dokumentzufuhreinrichtung (230) und ein Dokumentenablage (210) besitzt, wobei die Bilderzeugungsvorrichtung umfasst:
eine Abtasteinheit (220) zum Abtasten eines ersten Dokuments, das auf der Dokumentenablage (210) angeordnet ist, und mehrerer Seiten eines zweiten Dokuments, die durch die automatische Dokumentzufuhreinrichtung (230) zugeführt werden; und
eine Speichereinheit (260) zum Speichern von Bilddaten des ersten Dokuments und von Bilddaten des zweiten Dokuments, die sich aus dem Abtasten des ersten bzw. des zweiten Dokuments ergeben,
**gekennzeichnet durch**
eine Steuereinheit (270), die dazu ausgelegt ist, eine **durch** einen Anwender eingegebene Seitenzahl des ersten Dokuments zu empfangen und die Seitenzahl den Bilddaten des ersten Dokuments zuzuweisen, bevor die Abtasteinheit (220) die Seiten des zweiten Dokuments abtastet, und um Seitenzahlen den Bilddaten des zweiten Dokuments in der Reihenfolge, in der die Seiten des zweiten Dokuments abgetastet werden, zuzuweisen, wobei die **durch** den Anwender eingegebene Seitenzahl des ersten Dokuments weggelassen wird; und
eine Druckeinheit (280) zum Drucken der gespeicherten Bilddaten in einer Reihenfolge, die **durch** die zugewiesene Seitenzahl bestimmt ist.

10. Bilderzeugungsvorrichtung nach Anspruch 9, die ferner umfasst:
eine Anzeigeeinheit (250), die dazu ausgelegt ist, die gespeicherten Bilddaten, die in der bestimmten Reihenfolge angeordnet sind, anzuzeigen; und
eine Eingabeeinheit (240), die dazu ausgelegt ist, eine neue Reihenfolge zu empfangen, so dass die angezeigten Bilddaten entsprechend der neuen Reihenfolge umgeordnet werden können.

11. Bilderzeugungsvorrichtung nach Anspruch 9 oder 10, wobei sich die Abtasteinheit (220) in einer Beförderungsrichtung bewegt, um das auf der Dokumentenablage (210) angeordnete erste Dokument abzutasten, und in einem fixierten Zustand ist, während sie die von der automatischen Dokumentzufuhreinrichtung (230) zugeführten zweiten Dokumente abtastet.

12. Bilderzeugungsvorrichtung nach Anspruch 9, 10 oder 11, wobei die Seiten des zweiten Dokuments eine Größe haben, die durch die automatische Dokumentzufuhreinrichtung (230) zugeführt werden kann, und das erste Dokument wenigstens ein auf der Dokumentenablage (210) angeordnetes Dokument mit einer Größe, die nicht durch die automatische Dokumentzufuhreinrichtung (230) zugeführt werden kann, umfasst.

13. Bilderzeugungsvorrichtung nach Anspruch 12, wobei die Steuereinheit (270) ferner dazu ausgelegt ist, eine oder mehrere zweite Dokumentseitenzahlen der Seiten des zweiten Dokuments zu empfangen und die zweiten Seitenzahlen den Seiten des zweiten Dokuments in einer Reihenfolge zuzuweisen, in der die einen oder mehreren zweiten Dokumentseiten durch die Abtasteinheit (220) abgetastet werden, während die erste Seitenzahl den Bilddaten des ersten Dokuments zugewiesen wird.

14. Bilderzeugungsvorrichtung nach Anspruch 12, wobei die Speichereinheit (260) die durch die Abtasteinheit (220) gelesenen Bilddaten mit den entsprechenden ersten und zweiten Seitenzahlen speichert.

15. Bilderzeugungsvorrichtung nach Anspruch 12, die ferner umfasst:
eine Eingabeeinheit (240), die dazu ausgelegt ist, eine Anwenderangabe einer Anzahl von zu druckenden Kopien zu empfangen, wobei
die Steuereinheit (270) die Druckeinheit (280) steuert, um die gespeicherten Bilddaten in der bestimmten Reihenfolge in einer Anzahl, die der empfangenen Angabe entspricht, zu drucken.

16. Computerprogramm, das Softwarecode enthält, der dazu ausgelegt ist, das Verfahren nach einem der Ansprüche 1 bis 8 auszuführen, wenn er durch eine Datenverarbeitungsvorrichtung ausgeführt wird.

## Revendications

1. Procédé de commande d'un appareil de formation d'images comportant un chargeur automatique de documents (230) et un plateau pour documents (210), le procédé comprenant :
la numérisation d'un premier document placé sur le plateau pour documents (210) ;
la numérisation d'une pluralité de pages d'un deuxième document délivré par le chargeur automatique de documents (230) ; et
le stockage de premières données d'images de documents et de deuxièmes données d'images de documents résultant de la numérisation des pages du premier document et du deuxième document, **caractérisé par** :
la réception d'un nombre de pages de premier document fourni en entrée par un utilisateur et l'affectation du nombre de pages aux premières données d'images de document avant de numériser les pages du deuxième document ;
affecter les nombres de pages aux données d'images du deuxième document dans l'ordre dans lequel les pages du deuxième document sont numérisées, en omettant le nombre de pages du premier document fourni en entrée par l'utilisateur ; et
l'impression des données d'images stockées dans un ordre déterminé par les nombres de pages affectés.

2. Procédé selon la revendication 1, comprenant en outre :
l'affichage des données d'images stockées en conformité avec l'ordre déterminé ; et
la modification de l'ordre déterminé pour générer un nouvel ordre afin que des pages des données d'images puissent être agencées en conformité avec le nouvel ordre.

3. Procédé selon la revendication 1 ou 2, comprenant en outre :
la réception d'une indication par l'utilisateur d'un nombre de copies à imprimer ; et
l'impression des données d'images stockées en conformité avec l'ordre déterminé et avec l'indication reçue.

4. Procédé selon la revendication 1, 2 ou 3, dans lequel le premier document a une taille qui ne peut pas être délivrée par le chargeur automatique de documents et dans lequel les pages du deuxième document ont une taille qui peut être délivrée par le chargeur automatique de documents.

5. Procédé selon la revendication 4, comprenant en outre :
la vérification du fait qu'il y a ou non un premier document supplémentaire à numériser ;
s'il y a un premier document supplémentaire à numériser, la réception d'un autre nombre de pages saisi par l'utilisateur pour le premier document supplémentaire ; et
la numérisation des données d'images du premier document supplémentaire.

6. Procédé selon la revendication 4, comprenant en outre :
la réception d'une indication du nombre de premiers documents à numériser ; et
la répétition des étapes de réception d'un nombre de pages de premiers documents et la numérisation du premier document en conformité avec l'indication reçue.

7. Procédé selon l'une quelconque des revendications précédentes, dans lequel le stockage des données d'images du, au moins un, premier document et des pages du deuxième document comprend le stockage des données d'images des pages numérisées du deuxième document et du, au moins un, premier document avec les nombres de pages correspondants.

8. Procédé selon l'une quelconque des revendications précédentes, comprenant en outre la réception des nombres de pages d'un deuxième document saisis par un utilisateur et l'affectation des nombres de pages du deuxième document à des données d'images de pages de deuxième document respectives résultant de la numérisation de pages du deuxième document, dans un ordre dans lequel les pages du deuxième document sont numérisées, dans lequel l'étape d'impression comprend l'impression des données d'images stockées dans un ordre déterminé par les nombres de pages supplémentaires affectés.

9. Appareil de formation d'images ayant un chargeur automatique de documents (230) et un plateau pour documents (210), l'appareil de formation d'images comprenant :
une unité de numérisation (220) pour numériser un premier document placé sur le plateau pour documents (210) et une pluralité de pages d'un deuxième document délivré par le chargeur automatique de documents (230) ; et
une unité de stockage (260) pour stocker les données d'images du premier document et des données d'images d'un deuxième document résultant de la numérisation des premier et deuxième documents, **caractérisé par**:
une unité de commande (210) conçue pour recevoir un nombre de pages du premier document, fourni en entrée par un utilisateur et pour affecter le nombre de pages aux données d'images du premier document, avant que l'unité de numérisation (220) numérise les pages du deuxième document, et pour affecter des nombres de pages aux données d'images du deuxième document dans l'ordre dans lequel les pages du deuxième document sont numérisées, en omettant le nombre de pages du premier document, fourni en entrée par l'utilisateur ; et
une unité d'impression (280) pour imprimer les données d'images stockées dans un ordre déterminé par le nombre de pages affecté.

10. Appareil de formation d'images selon la revendication 9, comprenant en outre :
une unité d'affichage (250) conçue pour afficher les données d'images stockées agencées dans l'ordre déterminé ; et
une unité d'entrée (240) conçue pour recevoir un nouvel ordre afin que les données d'images affichées puissent être réarrangées en conformité avec le nouvel ordre.

11. Appareil de formation d'images selon la revendication 9 ou 10, dans lequel l'unité de numérisation (220) se déplace dans une direction de transport pour numériser le premier document placé sur le plateau pour documents (210) et est en position fixe pendant la numérisation des deuxièmes documents délivrés par le chargeur automatique de documents (230).

12. Appareil de formation d'images selon la revendication 9, 10 ou 11, dans lequel les pages du deuxième document ont une taille qui peut être délivrée par le chargeur automatique de documents (230), et le premier document comprend au moins un document placé sur le plateau pour documents (210) ayant une taille qui ne peut pas être délivrée par le chargeur automatique de documents (230).

13. Appareil de formation d'images selon la revendication 12, dans lequel l'unité de commande (270) est en outre conçue pour recevoir un ou plusieurs nombres de pages de deuxième document, parmi les pages du deuxième document et pour allouer les deuxièmes nombres de pages aux deuxièmes pages de document dans un ordre dans lequel les une ou plusieurs pages de deuxième document sont numérisées par l'unité de numérisation (220) tout en allouant le premier nombre de pages aux données d'images de premier document.

14. Appareil de formation d'images selon la revendication 12, dans lequel l'unité de stockage (260) stocke les données d'images lues par l'unité de numérisation (220) avec les premier et deuxième nombres de pages correspondants.

15. Appareil de formation d'images selon la revendication 12, comprenant en outre :
une unité d'entrée (240) conçue pour recevoir d'un utilisateur une indication d'un nombre de copies à imprimer, dans lequel
l'unité de commande (270) commande l'unité d'impression (280) afin d'imprimer les données d'images stockées dans l'ordre déterminé, un nombre de fois correspondant à l'indication reçue.

16. Programme informatique comprenant un code logiciel conçu pour mettre en oeuvre le procédé selon l'une quelconque des revendications 1 à 8 lorsqu'il est exécuté par un appareil de traitement de données.
